# EUROPÄISCHE PATENTSCHRIFT

(11) **EP 0 439 428 B1**
(45) Veröffentlichungstag und Bekanntmachung des Hinweises auf die Patenterteilung: **15.03.1995**
(21) Anmeldenummer: 91810031.4
(22) Anmeldetag: 15.01.1991
(51) Int. Cl.: B29D 11/00, G02C 7/04

(54) **Verfahren zur Herstellung von Kontaktlinsen und Kontaktlinsenfertigungssystem**
Process for the production of contact lenses and contact lens preparation system
Procédé pour la fabrication de lentilles de contact et système pour la préparation de lentilles de contact

(30) Priorität: 24.01.1990 DE 4002029
(43) Veröffentlichungstag der Anmeldung: 31.07.1991
(73) Patentinhaber: Novartis AG, 4058 Basel (CH)
(72) Erfinder: Höfer, Peter, W-8750 Aschaffenburg (DE); Hagmann, Peter, Dr., W-8759 Hösbach-Bahnhof (DE); Krieg, Gunther, Prof. Dr., W-7500 Karlsruhe 1 (DE); Vaas, Eberhard, W-7530 Pforzheim (DE)

(56) Entgegenhaltungen:
- EP-A- 0 007 006
- EP-A- 0 359 084
- WO-A-82/01494
- DE-A- 1 927 168
- FR-A- 2 388 294
- PATENT ABSTRACTS OF JAPAN vol. 13, no. 313 (C-618) 17. Juli 1989 ; & JP-A-10 97 434

## Beschreibung

Die Erfindung betrifft ein Verfahren zur Herstellung von Kontaktlinsen, insbesondere von individuell angepaßten Kontaktlinsen, sowie ein Kontaktlinsenfertigungssystem hierfür.

Ein nicht unerheblicher Anteil von Fehlsichtigen kann mit den herkömmlichen auf dem Markt erhältlichen Kontaktlinsen nicht versorgt werden, da aufgrund der Topographie der Augenoberfläche, insbesondere im Bereich der Cornea, herkömmliche, z. T. standardisierte Linsen unverträglich sind oder nur zu unbefriedigenden Sehkorrekturen führen. Für solche Personen verbleibt dann nur noch die Anfertigung von Sonderlinsen, die mit erheblichem Mehraufwand an Zeit, Kosten und auch mit einem erhöhten Anpassungsrisiko verbunden ist. Eine genaue Anpassung läßt sich in aller Regel nur nach mehreren Anpaßversuchen erreichen. In nicht wenigen Fällen ist eine Nachbearbeitung der Linse oder sogar ein Wechsel des Linsentyps erforderlich.

Aufgabe der Erfindung ist es, ein Verfahren und ein Kontaktlinsenfertigungssystem zu schaffen, durch die eine rationelle Fertigung von individuell angepaßten Kontaktlinsen, insbesondere die Fertigung von Sonderlinsen, erreicht wird. Dabei sollen Fertigungsverfahren angewandt werden, wie sie normalerweise für die Großserienfertigung von Kontaktlinsen zum Einsatz kommen.

Diese Aufgabe wird beim Verfahren erfindungsgemäß dadurch gelöst, daß
- die Topographie der Augenoberfläche ganzflächig dreidimensional gemessen wird;
- zur Anpassung an die gemessene Topographie die Geometrie der Rückfläche der Linse unter Zugrundelegung einer Anpaßcharakteristik bzw. Anpaßphilosophie (Anpaßkriterien, wie z. B. steile, flache Anpassung etc.) festgelegt wird;
- die optische Wirkung einer zwischen der so festgelegten Linsenrückfläche und der Augenoberfläche sich ergebenden Tränenlinse, welche durch die festgelegte Rückflächengeometrie und die gemessene Topographie der Augenoberfläche begrenzt ist, unter Berücksichtigung der mechanischen Eigenschaften der Kontaktlinse (hart, hart/flexibel, flexibel, weich) bestimmt wird;
- unter Berücksichtigung der optischen Wirkung der Tränenlinse und der durch die Kontaktlinse zu erzielenden Sehkorrektur die Frontflächengeometrie der Linse, insbesondere auch unter Berücksichtigung des verwendeten Kontaktlinsenmaterials bestimmt wird;
- die Daten für die Linsengeometrien an der Frontfläche und der Rückfläche der Linse gespeichert werden; und
- in Abhängigkeit von den gespeicherten Linsengeometriedaten die jeweilige Linse gefertigt wird.

Dieses Verfahren kann mit einem Kontaktlinsenfertigungssystem gemäß Anspruch 9 durchgeführt werden.

Die Fertigung der Linsen erfolgt nach einem der bekannten Verfahren. Beispielhaft seien angeführt
- die Drehtechnik
- das Einflächen-Gießform-Verfahren (Semimold)
- das Gießform-Verfahren (Fullmold)
- die Laserbearbeitung sowie
- Thermoformverfahren.

Das klassische Verfahren zur Herstellung von Kontaktlinsen stellt die Drehtechnik dar. Hierbei wird ein materialabtragendes Werkzeug verwendet, das von einem Linsenausgangskörper, der ein Linsenrohling (button) oder Halbrohling sein kann, Material abträgt. Das materialabtragende Werkzeug wird dabei durch die gespeicherten Geometriedaten mit Hilfe einer entsprechenden Steuereinrichtung in der Bearbeitungsmaschine gesteuert. Als materialabtragendes Werkzeug kann ein spangebendes Werkzeug, beispielsweise ein Drehdiamant, verwendet werden. Hierbei wird der Linsenausgangskörper an einer Spindelspitze befestigt, die zusammen mit der Spindel um die Spindelachse in Drehung versetzt wird. In Abhängigkeit von den gespeicherten Geometriewerten wird dann das materialabtragende Werkzeug, insbesondere das spangebende Werkzeug, gesteuert durch die gespeicherten Geometriedaten, bewegt, so daß die gewünschten Geometrien an der Frontfläche bzw. der Rückfläche der Kontaktlinse sowie dem Rand entstehen. Als materialabtragendes Werkzeug eignet sich auch ein Laserstrahl, der In Abhängigkeit von den gespeicherten Geometriedaten der Linse gesteuert wird.

Ferner kann die Linsenherstellung durch das Einflächen-Gießform- oder das Gießform-Verfahren erfolgen. Beim Gießformverfahren können in bekannter Weise zwei Formgießhälften verwendet werden, zwischen die das Kontaktlinsenmaterial in einem Ausgangszustand eingebracht wird. Beispielsweise durch Polymerisieren erfolgt dann die Überführung des Kontaktlinsenmaterials in seinen Endzustand, wobei durch die Formflächen an den beiden Formgießhälften die Frontflächengeometrie und die Rückflächengeometrie der Linse gebildet werden. Die Formflächen der Formhälften der Gießform sind vorher in Abhängigkit von den gespeicherten Geometriedaten für die Frontfläche und die Rückflache der Linse geformt worden. Dies kann durch ein entsprechend gesteuertes materialabtragendes Werkzeug erfolgen, welches an der Gießform im Bereich der herzustellenden Formflächen Material von der Gießform abträgt. Dies kann in der gleichen Weise erfolgen wie bei der direkten Linsenherstellung durch Materialabtragung an einem Gießformausgangskörper.

Die gewünschte Oberflächengeometrie der Kontaktlinse wird durch die Formflächen an der Gießform bzw. den Gießformhälften hergestellt.

Ferner sind Gießformen bekannt, bei denen eine endgültige Randgestaltung während des Formgießens am Linsenkörper durchgeführt wird.

Nach Beendigung des Gießvorgangs kann, falls erforderlich, eine nachträgliche Bearbeitung des Randes durchgeführt werden. Die direkte Herstellung der Gießform durch Materialabtragung an einem Gießformausgangskörper wird bevorzugt für eine Einzelanfertigung von Linsen oder bei extrem teuren Ausgangsmaterialien für die Kontaktlinsen angewendet. Für eine Massenfertigung bzw. die Herstellung von Kontaktlinsen in größerer Stückzahl nach dem Gießform-Verfahren werden zunächst Formgebungswerkzeuge nach den gespeicherten Geometriewerten für die Frontfläche und die Rückfläche sowie für den Rand der Linse geformt. Die Gießformen werden dann mit diesen Formgebungswerkzeugen beispielsweise nach dem Spritzgießverfahren hergestellt.

Die Erfindung kann bei der Herstellung von harten, weichen oder flexiblen Linsen zum Einsatz kommen. Vor allem bei der Herstellung von Sonderlinsen zur Erzielung einer individuellen Anpassung, die mit standardisierten Kontaktlinsentypen nicht erreicht werden kann, erweist sich die Erfindung von Vorteil. Die Erfindung zeichnet sich weiterhin durch eine hohe Wiederholgenauigkeit der zu formenden Linsengeometrie aus. Es ist kein Probieren mit sogenannten Leihlinsen erforderlich. Ferner wird bei der Erfindung die Physiologie am Auge des Kontaktlinsenträgers optimal berücksichtigt. Durch die Erfindung wird eine genaue Einbindung der Tränenflüssigkeitslinse zwischen Linsenrückfläche und Augenoberfläche in die Sehkorrektur erreicht. Ferner wird eine hohe Verträglichkeit und schnelle Versorgung mit Kontaktlinsen auch bei stark deformierter Hornhäut bei Keratokonus, traumatischen Veränderungen usw. erzielt.

Anhand der Figuren wird an Ausführungsbeispielen die Erfindung noch näher erläutert. Es zeigt:
- Fig. 1: ein Ausführungsbeispiel eines Kontaktlinsenfertigungssystems nach der Erfindung; und
- Fig. 2: eine Ausführungsform für eine Formgebungseinrichtung für die Linsenherstellung, welche alternativ bei dem in Fig. 1 dargestellten Ausführungsbeispiel zum Einsatz kommen kann; und
- Fig. 3: ein Kontaktlinsenprofil.

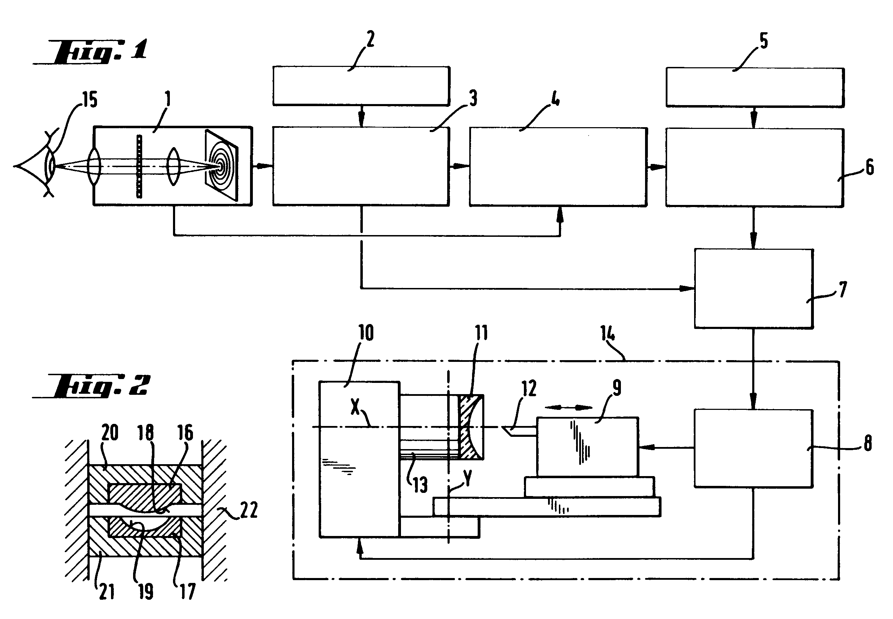

Das in der Fig. 1 dargestellte Kontaktlinsenfertigungssystem besitzt eine Topographiemeßeinrichtung 1 zur dreidimensionalen Messung der Topographie der Oberfläche eines menschlichen Auges 15. Diese Topographiemeßeinrichtung 1 kann beispielsweise nach der Moire-Technik arbeiten. Bei diesem Verfahren wird auf die zu messende Oberfläche, d. h. auf die Augenoberfläche, ein Liniengitter projiziert, welches bei einer Betrachtung durch das Gitter Interferenzlinien ergibt, die Höhenlinien der Oberfläche des Auges darstellen. Dieses sogenannte Moirebild enthält die gesamte Information, die zur Bestimmung der Oberflächenkoordinaten notwendig sind. Es stellt sozusagen ein Höhenbild der Augenoberflache dar.

Ferner kann die Topographiemeßeinrichtung 1 auch ein auf dem Markt befindliches Topographiemeßgerät, beispielsweise ein "ECT 100 Cornealtopographer" der Firma Optimed Inc., Alpharetta sein. Auch hier gewinnt man, ähnlich wie bei dem Moirebild, eine Abbildung der Augenoberflächen in Höhenlinien. Ferner kann zur berührungslosen Abtastung der Augenoberfläche ein sogenannter Laserstylus verwendet werden, bei dem ein Fokusdetektor das von der abgetasteten Oberfläche rückgestreute Licht analysiert und für die verschiedenen Oberflächenprofile entsprechende Profilsignale liefert.

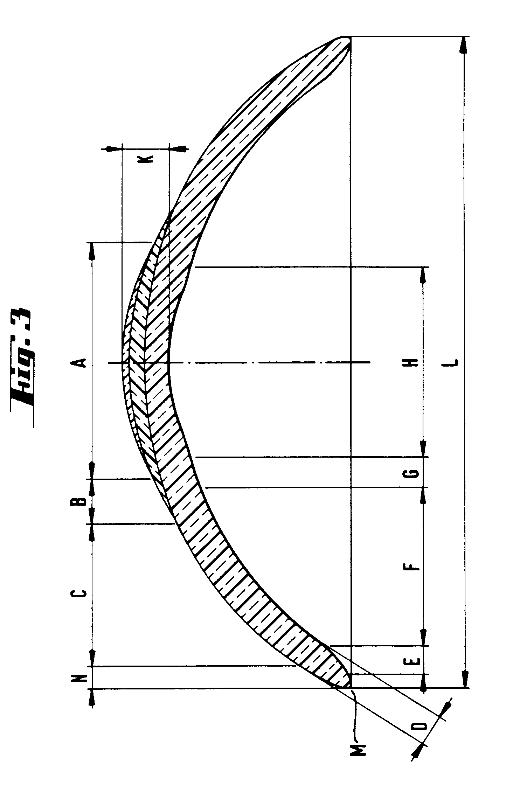

In einer nachgeschalteten Rechnereinheit 3 wird aus den Oberflächensignalen, die die Topographiemeßeinrichtung 1 liefert, die Rückflächengeometrie für die herzustellende Kontaktlinse bestimmt. Hierbei wird ferner eine von einer Einstelleinrichtung 2, die auch als Speichereinrichtung ausgebildet sein kann, eine Anpaßcharakteristik oder Anpaßphilosophie geliefert. Durch die Einstelleinrichtung 2 wird der Rechnereinrichtung 3 angegeben, ob es sich z. B. um eine flache oder steile Anpassung der Linsenrückfläche an die Augenoberfläche handeln soll. Das heißt, in der Rechnereinheit 3 wird unter Zugrundelegung der topographischen Daten der Augenoberfläche, insbesondere im Bereich der Cornea, und unter Zugrundelegung einer ausgewählten Anpaßphilosophie die Geometrie der Rückfläche der herzustellenden Kontaktlinse festgelegt. Die Rückfläche umfaßt normalerweise die rückoptische Zone, die Rückübergangszone, die Anpaßzone, den Rückbevel und auch den Rand, der den Übergangsbereich zwischen Vorder- und Rückfläche der Kontaktlinse bildet (Fig. 3).

In einer weiteren, an die Rechnereinheit 3 angeschlossenen Rechnereinheit 4 wird die optische Wirkung der Tränenlinse, die sich beim Tragen der Kontaktlinse zwischen der Augenoberfläche und der Rückfläche der Kontaktlinse bildet, ermittelt. Hierbei werden die von der Topographiemeßeinrichtung 1 bestimmten Topographiemeßdaten und die in der Rechnereinheit 3 bestimmten Rückflächengeometriedaten sowie die mechanischen Eigenschaften des Kontaktlinsennmaterials berücksichtigt. Die Rechnereinheit 4 ist hierfür sowohl an die Topographiemeßeinrichtung 1 als auch an die Rechnereinheit 3 angeschlossen. Unter Berücksichtigung des Brechungsindexes der Tränenflüssigkeit läßt sich mithin die optische Wirkung der Tränenlinse bestimmen.

An die Rechnereinheit 4 ist eine dritte Rechnereinheit 6 angeschlossen, in welcher die Frontflächengeometrie der Kontaktlinse bestimmt wird. Die Bestimmung der Frontflächengeometrie erfolgt unter Berücksichtigung der optischen Wirkung der Tränenlinse, die in der Rechnereinheit 4 ermittelt wurde. Ferner wird die gewünschte Sehkorrektur, welche durch die Kontaktlinse erreicht werden soll, berücksichtigt. Diese Daten für die Sehkorrektur sind in einer Speichereinrichtung 5 eingespeichert. Es kann sich hier Jedoch auch um eine entsprechende Eingabeeinrichtung handeln, bei der beispielsweise mit Hilfe einer Tastatur die entsprechenden Sehkorrekturwerte (Scheitelbrechwerte) eingegeben werden. In der Rechnereinheit 6 wird das gesamte, aus Kontaktlinse (Brechungsindex des Linsenmaterials) und Tränenlinse sich zusammensetzende Korrektursystem berücksichtigt. Das heißt, es wird die optische Wirkung der Tränenlinse und die durch die Rechnereinheit 3 vorgegebene Rückflächengeometrie der herzustellenden Kontaktlinse bei der Bestimmung der Vorderflächengeometrie der Kontaktlinse berücksichtigt. Die Frontfläche der Kontaktlinse umfaßt die frontoptische Zone, die Frontübergangszone, den Lenti und den Frontbevel.

In der Fig. 3 sind die verschiedenen Zonen auf der Front- und Rückfläche der Kontaktlinse dargestellt. Anhand der folgenden Tabelle ergeben sich die hierfür verwendeten Begriffe.

**Tabelle**

| Zone | Zonenbezeichnung |
|---|---|
| A | Frontoptische Zone |
| B | Frontübergangszone |
| C | Lenti |
| D | Randdicke |
| E | Rückbevel |
| F | Anpaßzone |
| G | Rückübergangszone |
| H | Rückoptische Zone |
| K | Mittendicke |
| L | Durchmesser |
| M | Rand |
| N | Frontbevel |

Ein optimaler Sitz der Kontaktlinse gepaart mit hervorragender Verträglichkeit kann erreicht werden, wenn die Rückflächemöglichst gleichmässig auf der Hornhaut, möglicherweise auch auf einem Teil der Sklera, aufliegt. Es muss erreicht werden, dass die Kontaktlinse dem Oberlid sehr wenig Widerstand bietet.

Die physiologischen Grundforderungen stehen diesem Ziel allerdings etwas im Wege. Die Versorgung der Hornhaut mit Sauerstoff erfolgt von aussen über Permeation durch die Kontaktlinse und durch in der Tränenflüssigkeit gebundenen Sauerstoff. Unter Berücksichtigung der beiden Hauptanforderungen, optimale Verträglichkeit und maximale Versorgung der Hornhaut mit Sauerstoff, wird eine Geometrie bestimmt, die zum einen einen hervorragenden Spontankomfort erlaubt, zum anderen aufgrund einer speziell bestimmten, ständig sich austauschenden Tränenflüssigkeitsmenge zwischen der Kontaktlinse und der Cornea eine gute Versorgung mit Sauerstoff garantiert.

Dazu werden mit Hilfe der Rechnereinheiten folgende Hauptparameter bestimmt:
- Gesamtdurchmesser der Linse
- Innengeometrie (Ellipsoid, Sphäre, Kombination etc.)
- Volumen der Tränenflüssigkeitslinse
- Austauschmenge der Tränenflüssigkeit
- optimiertes Gesamtdesign der Kontaktlinse unter besonderer Berücksichtigung eines verträglichen Lentikularrandes
- Gesamtscheitelbrechwert der Kontaktlinse unter Berücksichtigung der Tränenflüssigkeitslinse

Bei der Bestimmung der Hauptparameter muss insbesondere auch der von Auge zu Auge unterschiedliche Verlauf der Sklera berücksichtigt werden. Bei gleichen zentralen Cornearadien kann die Sklera ausgehend von der Cornea unterschiedlich verflachen. Am einen Ende der Möglichkeiten liegen sehr flache Verläufe, am anderen sehr steile Verläufe der Sklera. Im ersten Fall wird eine prinzipiell flachere Anpassung gewählt, d.h., der zentrale Krümmungsradius der Kontaktlinse wird um 0,1 mm grösser (flacher) gewählt, als der flachste zentrale Cornearadius. Der Rückbevel und der Rand der Kontaktlinse werden so gestaltet, dass bei einer Beweglichkeit der Linse von bis zu 2 mm sich der Linsenrand nicht in die Augenoberfläche "eingräbt".

Im zweiten Fall wird eine steilere Anpassung gewählt, um die Beweglichkeit der Linse auf ca. 1 mm zu reduzieren. Hierbei wird angestrebt, dass die Linse bevorzugt am Rand auf der Cornea aufliegt. Der zentrale Krümmungsradius der Kontaktlinse wird um 0,1 mm kleiner gewählt, als der flachste zentrale Cornearadius. Bei der "Steilanpassung" ergibt sich zwischen der Cornea und der Rückläche der Kontaktlinse eine Tränenlinse, welche einer "Positiv"-Linse entspricht.

Bei einer normal geformten Corneaoberfläche wird eine Parallelanpassung bevorzugt, bei der Cornea und Rückfläche der Kontaktlinse nur durch einen dünnen, gleichmässigen Tränenfilm getrennt sind. Entspricht die Cornea in ihrer Form weitgehend einem Rotationsellipsoid - was aus der 3D-Messung entnommen werden kann - wird eine formgleiche Rückfläche der Kontaktlinse hergestellt. Die Exzentrizität der Rückfläche wird selbstverständlich in diesem Fall individuell gewählt, so dass eine optimale Parallelanpassung vorliegt.

Die Geometrien der verbleibenden Zonen an der Vorderfläche werden unter Berücksichtigung ähnlicher Gesichtspunkte wie bei der Festlegung der Rückflachengeometrie mit dem Ziel bestmöglicher Verträglichkeit und Irritationsfreiheit bestimmt.

Die gewonnenen Geometriedaten für die Vorderfläche und die Rückfläche der Kontaktlinse werden dann so aufbereitet, daß sie an eine Kontaktlinsenfertigungseinrichtung 14 übergeben werden können. Die Übergabe erfolgt in bevorzugter Weise mit Hilfe geeigneter Datenträger, z. B. Disketten, Platten, Bänder und dgl.. Es ist jedoch auch möglich, die Übergabe mit Hilfe von Datenfernübertragung zwischen dem Anpasser und der Fertigungsstätte zu übertragen. Die Abspeicherung und die Übertragung ist in der Fig. 1 schematisch durch eine Speichereinrichtung 7 für die Front- und Rückflächengeometrie dargestellt. Diese Speichereinrichtung 7 beeinflußt eine Steuereinrichtung 8 in der Formgebungseinrichtung 14 für die herzustellende Kontaktlinse. Diese Formgebungseinrichtung 14 kann einen Werkzeughalter 9 für ein materialabtragendes Werkzeug, insbesondere Drehwerkzeug 12, aufweisen. Ferner besteht die Bearbeitungsmaschine aus einem Spindelstock 10 mit einer drehbaren Spindel 13. An der Spindelspitze kann ein Linsenausgangskörper 11 in bekannter Weise befestigt sein. Es kann sich hier um einen Linsenrohling oder vorgeformten halbfertigen Linsenrohling handeln. Derartige Drehmaschinen sind bekannt (z. B. deutsche Patentschrift 31 10 624). Die Steuerung der Zustellung des Drehwerkzeugs 12 und der Spindel 13 im Spindelstock 10 erfolgt Jedoch mit Hilfe der Sternereinrichtung 8, deren Steuersignale durch die in der Speichereinrichtung 7 abgespeicherten Geometriedaten für die Linsenvorderfläche und die Linsenrückfläche vorgegeben sind. Diese Steuersignale der Steuereinheit 8 beeinflussen die Relativstellung des Drehwerkzeugs 12 zum Linsenausgangskörper 11, so daß die entsprechenden Materialmengen vom Linsenausgangskörper 11 in Abhängigkeit von den gewünschten Geometriedaten abgetragen werden.

Bei den dargestellten Ausführungsbeispiel der materialabtragenden Bearbeitungsmaschine kann das Drehwerkzeug 12 um eine zur Spindelachse X senkrecht verlaufende Schwenkachse Y schwenkbar angeordnet sein, wie das beispielsweise bei der aus der deutschen Patentschrift 31 10 624 bekannten Maschine der Fall ist. Durch die Steuereinheit 8 kann der Schwenkwinkel des Drehwerkzeuges 12 um die Achse Y und auch der Abstand des Drehwerkzeugs 12 gegenüber der Schwenkachse Y eingestellt werden. Diese Einstellung erfolgt in Abhängigkeit von der in der Speichereinrichtung 7 enthaltenen Geometriedaten für die Vorderfläche und die Rückfläche der herzustellenden Kontaktlinse. Bei dem dargestellten Ausführungsbeispiel wird in einem direkten Drehverfahren die Kontaktlinse hergestellt, d. h. die gewünschten Geometrien an der Vorderfläche bzw. an der Rückfläche werden mit Hilfe der dargestellten Drehmaschine an Linsenausgangskörper 11 hergestellt.

Mit der dargestellten materialabtragenden Bearbeitungsmaschine können jedoch auch Formflächen 18, 19 an Formeinsätzen 16, 17 (Fig. 2) in Abhängigkeit von den gespeicherten Geometriedaten für die Vorderfläche und die Rückfläche der herzustellenden Kontaktlinse gefertigt werden. Hierzu wird der entsprechende Formeinsatz 16 bzw. 17 auf die Spitze der Spindel 13 anstelle des Linsenausgangskörpers 11 aufgesetzt und befestigt. Gesteuert durch die Steuereinheit 8 werden dann die Formflächen 18 und 19, durch welche die Kontaktlinsenrückfläche und die Kontaktlinsenvorderfläche in einem in der Fig. 2 schematisch dargestellten Formgießverfahren hergestellt werden, erzeugt. Beim Formgießen der Kontaktlinse wird in bekannter Weise das Kontaktlinsenmaterial zwischen die beiden formgebenden Formflächen 18 und 19 der Formeinsätze 16 und 17 eingebracht. Als Ausgangsmaterial kann ein polymerisierbares Kontaktlinsenmaterial zwischen die beiden Formeinsätze 16 und 17 eingebracht werden. Der Formgießvorgang kann dann in bekannter Weise durchgeführt werden. Daneben können auch Thermoformverfahren in bekannter Weise angewendet werden.

Die fertiggestellte Kontaktlinse wird an den Kontaktlinsenträger übergeben, und es wird eine Anpaßkontrolle durchgeführt. Die Anpaßkontrolle kann beispielsweise mit Fluobildern durchgeführt werden. Die Auswertung der Fluobilder erfolgt in bevorzugter Weise mit einem Bildverarbeitungssystem, das in die Rechnereinheit 3 integriert oder hier angeschlossen sein kann. Die in der Speichereinrichtung 2 abgespeicherte Anpaßphilosophie kann dann in Abhängigkeit der sich aus der Anpaßkontrolle ergebenden statistischen Daten gegebenenfalls nachkorrigiert werden. Dies kann in vorteilhafter Weise mit Hilfe von KI-Programmen oder neuronalen Netzwerten erfolgen.

## Patentansprüche

1. Verfahren zur Herstellung von individuell angepassten Kontaktlinsen, bei dem
- die Topographie der Augenoberfläche ganzflächig ausgemessen wird;
- zur Anpassung an die gemessene Topographie der Augenoberfläche die Geometrie der Rückfläche der Linse bestimmt wird;
- die optische Wirkung einer zwischen der zuvor bestimmten Linsenrückfläche und der Augenoberfläche sich ergebenden Tränenlinse bestimmt wird;
- unter Berücksichtigung der optischen Wirkung der zuvor bestimmten Tränenlinse und der insgesamt zu erzielenden Sehkorrektur die Frontflächengeometrie der Linse bestimmt wird;
- die Daten für die Linsengeometrie an Front- und Rückfläche der Linse gespeichert werden; und
- in Abhängigkeit von den gespeicherten Linsengeometriedaten die jeweilige Kontaktlinse gefertigt wird.

2. Verfahren nach Anspruch 1, bei dem die Linsenfertigung durch Materialabtragung von einem Linsenausgangskörper erfolgt, und daß das materialabtragende Werkzeug durch die gespeicherten Geometriedaten gesteuert wird.

3. Verfahren nach Anspruch 2, bei dem als materialabtragendes Werkzeug ein spanendes Werkzeug verwendet wird.

4. Verfahren nach Anspruch 2, bei dem als materialabtragendes Werkzeug ein Laserstrahl verwendet wird.

5. Verfahren nach Anspruch 1, bei dem die Kontaktlinse durch Formgießen hergestellt wird und die Geometrie der Formflächen der Gießform in Abhängigkeit von den gespeicherten Geometriedaten der Linse geformt wird.

6. Verfahren nach Anspruch 1, bei dem die Kontaktlinse nach dem Thermoform-Verfahren mit Hilfe eines Prägestempels hergestellt wird, dessen formende Prägeflächen in Abhängigkeit von den gespeicherten Geometriedaten der Kontaktlinse gebildet worden sind.

7. Verfahren nach Anspruch 5 oder 6, bei dem die Formwerkzeuge zur Herstellung der Formflächen der Gießform oder des Prägestempels in Abhängigkeit von den gespeicherten Geometriedaten der Linse geformt werden.

8. Verfahren nach Anspruch 1, bei dem die Geometrie der Rückfläche der Linse zusätzlich noch in Abhängigkeit von bei Anpaßkontrollen gewonnenen Statistikdaten bestimmt wird.

9. Kontaktlinsenfertigungssystem zur Herstellung individuell angepasster Kontaktlinsen nach dem Verfahren gemäß Anspruch 1, mit
- einer Topographiemesseinrichtung zum dreidimensionalen ganzflächigen Messen der Topographie der Augenoberfläche;
- einer ersten Rechnereinheit eingerichtet zur Bestimmung der Geometrie der Linsenrückfläche zur Anpassung an die gemessene Topographie der Augenoberfläche;
- einer zweiten Rechnereinheit eingerichtet zur Bestimmung der optischen Wirkung der zwischen der Augenoberfläche und der zuvor bestimmten Linsenrückfläche sich bildenden Tränenlinse;
- einer dritten Rechnereinheit eingerichtet zur Bestimmung der Frontflächengometrie unter Berücksichtigung der optischen Wirkung der zuvor bestimmten Tränenlinse und der ingesamt zu erzielenden Sehkorrektur;
- einer Speichereinrichtung zum Speichern der Daten für die Linsengeometrien der Rückflache und Frontfläche der Kontaktlinse; und
- einer durch die Speichereinrichtung gesteuerte Formgebungseinrichtung zur Linsenherstellung.

10. Kontaktlinsenfertigungssystem nach Anspruch 9, bei dem die Formgebungseinrichtung eine von der Speichereinrichtung gesteuerte, am Linsenkörper materialabtragende Bearbeitungsmaschine aufweist.

11. Kontaktlinsenfertigungssystem nach Anspruch 9, bei dem die Formgebungseinrichtung eine durch die Speichereinrichtung gesteuerte Bearbeitungsmaschine zur Herstellung von Gießformen, mit denen die Kontaktlinsen durch Formgießen hergestellt werden, aufweist.

12. Kontaktlinsenfertigungssystem nach Ansprüchen 9 und 11, bei dem die Formgebungseinrichtung eine durch die Speichereinrichtung gesteuerte Bearbeitungsmaschine zur Herstellung von Formwerkzeugen für die Gießformen aufweist.

13. Kontaktlinsenfertigungssystem nach Anspruch 9, bei dem die Formgebungseinrichtung eine durch die Speichereinrichtung gesteuerte Bearbeitungsmaschine zur Herstellung von Prägestempeln für das Thermoform-Verfahren aufweist.

14. Kontaktlinsenfertigungssystem nach einem der Ansprüche 11 bis 13, bei dem die Formgebungseinrichtung eine durch die Speichereinrichtung gesteuerte materialabtragende Bearbeitungsmaschine aufweist.

## Claims

1. A method for the manufacture of individually fitted contact lenses, wherein
- the topography of the whole surface of the eye is measured;
- the geometry of the rear face of the lens is determined so as to fit the measured topography of the surface of the eye;
- the optical effect of a lachrymal lens which is formed between the previously determined rear face of the lens and the surface of the eye is determined;
- the geometry of the front face of the lens is determined taking into account the optical effect of the previously determined lachrymal lens and the overall sight correction to be achieved;
- the data for the lens geometry of the front and the rear faces of the lens are stored; and
- the particular contact lens concerned is produced in accordance with the stored lens geometry data.

2. A method according to claim 1, wherein the lens production is effected by removing material from a lens blank, and the material-removing tool is controlled by the stored geometry data.

3. A method according to claim 2, wherein a cutting tool is used as the material-removing tool.

4. A method according to claim 2, wherein a laser beam is used as the material-removing tool.

5. A method according to claim 1, wherein the contact lens is manufactured by casting and the geometry of the moulding faces of the mould is shaped in accordance with the stored geometry data of the lens.

6. A method according to claim 1, wherein the contact lens is manufactured in accordance with the thermoforming process using a stamping die, the moulding stamp faces of which have been formed in accordance with the stored geometry data of the contact lens.

7. A method according to claim 5 or claim 6, wherein the shaping tools for the manufacture of the moulding faces of the mould or the stamping die are shaped in accordance with the stored geometry data of the lens.

8. A method according to claim 1, wherein the geometry of the rear face of the lens is determined additionally in accordance with statistical data obtained during fitting checks.

9. Contact lens production system for the manufacture of individually fitted contact lenses by the method according to claim 1, which comprises
- a topography measuring arrangement for the three-dimensional measurement of the topography of the whole surface of the eye;
- a first computer unit set up to determine the geometry of the rear face of the lens so as to fit the measured topography of the surface of the eye;
- a second computer unit set up to determine the optical effect of the lachrymal lens formed between the surface of the eye and the previously determined rear face of the lens;
- a third computer unit set up to determine the geometry of the front face taking into account the optical effect of the previously determined lachrymal lens and the overall sight correction to be achieved;
- a storage arrangement for storing the data for the lens geometries of the rear face and front face of the contact lens; and
- a shaping arrangement, controlled by the storage arrangement, for manufacturing the lens.

10. A contact lens production system according to claim 9, wherein the shaping arrangement comprises a machine tool which is controlled by the storage arrangement and removes material from the lens body.

11. A contact lens production system according to claim 9, wherein the shaping arrangement comprises a machine tool, controlled by the storage arrangement, for the manufacture of moulds with which the contact lenses are manufactured by casting.

12. A contact lens production system according to claims 9 and 11, wherein the shaping arrangement comprises a machine tool, controlled by the storage arrangement, for the manufacture of shaping tools for the moulds.

13. A contact lens production system according to claim 9, wherein the shaping arrangement comprises a machine tool, controlled by the storage arrangement, for the manufacture of stamping dies for the thermoforming process.

14. A contact lens production system according to any one of claims 11 to 13, wherein the shaping arrangement comprises a material-removing machine tool controlled by the storage arrangement.

## Revendications

1. Procédé pour fabriquer des lentilles de contact adaptées au porteur, dans lequel
- la topographie de la surface de l'oeil est mesurée sur toute sa surface ;
- pour assurer l'adaptation à la topographie mesurée de la surface de l'oeil, on détermine la géométrie de la face arrière de la lentille ;
- on détermine l'effet optique d'une lentille lacrymale qui se forme entre la face arrière de lentille déterminée ci-dessus et la surface de l'oeil ;
- en tenant compte de l'effet optique de la lentille lacrymale prédéfinie, et de la correction globale à obtenir, on détermine la géométrie de la face frontale de la lentille ;
- on mémorise les données relatives à la géométrie de la lentille, pour la face frontale et la face arrière de la lentille ; et
- en fonction des caractéristiques géométriques mémorisées de la lentille, on fabrique la lentille de contact considérée.

2. Procédé selon la revendication 1, dans lequel la fabrication de la lentille s'effectue par enlèvement de matière à partir d'une ébauche de lentille, l'outil à enlèvement de matière étant commandé par les données géométriques mémorisées.

3. Procédé selon la revendication 2, dans lequel on utilise comme outil à enlèvement de matière un outil à enlèvement de copeaux.

4. Procédé selon la revendication 2, dans lequel on utilise comme outil à enlèvement de matière un faisceau laser.

5. Procédé selon la revendication 1, dans lequel on fabrique la lentille de contact par moulage par coulée, la géométrie des surfaces de moulage du moule de coulée dépendant des données géométriques mémorisées de la lentille.

6. Procédé selon la revendication 1, dans lequel la lentille de contact est fabriquée par le procédé de thermoformage à l'aide d'un poinçon, dont les surfaces formantes ont été réalisées en fonction des données géométriques mémorisées de la lentille de contact.

7. Procédé selon la revendication 5 ou 6, dans lequel les moules destinés à fabriquer les surfaces de moulage du moule de coulée ou du poinçon sont façonnés en fonction des données géométriques mémorisées de la lentille.

8. Procédé selon la revendication 1, dans lequel on détermine encore la géométrie de la face arrière de la lentille en fonction de données statistiques obtenues lors de contrôles d'adaptation.

9. Système de fabrication de lentilles de contact, pour fabriquer des lentilles de contact adaptées au porteur, par le procédé selon la revendication 1, comportant :
- un dispositif de mesure topographique, pour la mesure tridimensionnelle, en pleine surface, de la topographie de la surface de l'oeil ;
- un premier calculateur, destiné à déterminer la géométrie de la face arrière de la lentille, pour adaptation de la topographie mesurée à la surface de l'oeil ;
- un deuxième calculateur, destiné à déterminer l'effet optique de la lentille lacrymale qui se forme entre la surface de l'oeil et la face arrière de lentille déterminée au préalable ;
- un troisième calculateur, destiné à déterminer la géométrie de la face frontale en tenant compte de l'effet optique de la lentille lacrymale déterminée au préalable, ainsi que de la correction globale à réaliser ;
- un dispositif de mémorisation pour mémoriser les caractéristiques de la géométrie de la face arrière et de la face frontale de la lentille de contact ; et
- un dispositif de façonnage, commandé par le dispositif de mémorisation, pour assurer la fabrication de la lentille.

10. Système de fabrication de lentilles de contact selon la revendication 9, dans lequel le dispositif de façonnage comporte une machine d'usinage commandée par le dispositif de mémorisation, et enlevant de la matière de l'ébauche de lentille.

11. Système de fabrication de lentilles de contact selon la revendication 9, dans lequel le dispositif de façonnage comporte une machine d'usinage commandée par le dispositif de mémorisation, pour fabriquer des moules de coulée à l'aide desquels on fabrique les lentilles de contact par moulage par coulée.

12. Système de fabrication de lentilles de contact selon les revendications 9 et 11, dans lequel le dispositif de façonnage comporte une machine d'usinage commandée par le dispositif de mémorisation, pour fabriquer des moules pour le moulage par coulée.

13. Système de fabrication de lentilles de contact selon la revendication 9, dans lequel le dispositif de façonnage comporte une machine d'usinage commandée par le dispositif de mémorisation, pour fabriquer des poinçons destinés au procédé de thermoformage.

14. Système de fabrication de lentilles de contact selon l'une des revendications 11 à 13, dans lequel le dispositif de façonnage comporte une machine d'usinage à enlèvement de matière, commandée par le dispositif de mémorisation.
